Europäisches Patentamt

**European Patent Office**

Office européen des brevets

(11) Publication number : **0 497 570 A1**

## (12) EUROPEAN PATENT APPLICATION

(21) Application number : **92300735.5**

(22) Date of filing : **29.01.92**

(51) Int. Cl.$^5$: **B01D 53/26,** B60T 17/00

(30) Priority : **29.01.91 GB 9101887**

(43) Date of publication of application :
**05.08.92 Bulletin 92/32**

(84) Designated Contracting States :
**BE DE ES FR GB IT NL SE**

(71) Applicant : **BENDIX LIMITED**
**Douglas Road**
**Kingswood, Bristol BS15 2NL (GB)**

(72) Inventor : **Oliver, Patrick Ronald**
**84 Pearsall Road**
**Longwell Green, Bristol BS15 6BE (GB)**

(74) Representative : **Turner, Alan Reginald**
**BENDIX LIMITED Douglas Road**
**Kingswood, Bristol BS15 2NL (GB)**

(54) **Gas drying apparatus.**

(57)  In an air dryer for a compressed air system a cannister (15) contains a filter (21) and a body of desiccant material via which compressed air is conducted from an input port (2) to a delivery chamber (6) for charging a storage reservoir, a purge valve (8, 9) being operable during compressor off-load intervals to permit reverse flow of dry air through the desiccant and a baffle plate (4) being included between the input port and the relatively large main volume of the cannister (15) to create a relatively small volume (3) which for reverse flow communicates with the main volume via only a restricted passage (26) to minimise the impulsive energy dissipation and noise attendant upon opening of the purge valve.

This invention relates to gas drying apparatus and relates particularly to gas drying apparatus containing desiccant material which requires to be regenerated from time to time by the passage therethrough of measured discharge of dry gas.

Gas drying apparatus, particularly air dryers are well known especially for use in compressed air systems of vehicles. Such air dryers are usually installed in the flow path of compressed air from an engine-driven compressor to one or more storage reservoirs, to ensure that dry air is always available for operating the vehicle brakes. Such an air dryer typically comprises a main body which carries an input port, a delivery port and a vent port and carried by the main body there is a chamber containing filtering and desiccant means via which the input air flows to the delivery port. In addition, the main body usually carries a normally closed purge valve which can be signalled to open from time to time to discharge accumulated condensates from a sump region and also provide for a controlled reverse flow of dry air through the desiccant for regeneration purposes. The dry air for such regeneration may either be derived from a specific purge-air storage volume or alternatively it may be derived from one of the normal storage reservoirs under the control of suitable purge-timing means.

One shortcoming associated with the use of such a purge valve is that when the valve is initially switched to its open condition the resulting impulsive discharge of air at high pressure is accompanied by undesirable noise level similar to that which may accompany a minor explosion. Although a suitable silencer may be connected downstream of the purge valve, such a silencer tends to be bulky or complex and the object or the present invention is to provide an improved gas drying apparatus wherein this shortcoming is substantially reduced.

According to the present invention there is provided gas drying apparatus including a main body having a compressed gas input port, a compressed gas delivery port and a vent port said body carrying a container of relatively large volume for a drying material and means defining a relatively unrestricted forward flow path for directing received compressed gas in a forward direction through said drying material before delivery at said delivery port, a purge valve operable when opened to direct dry gas through said drying material to the vent port for regenerating the drying material and said means defining a relatively small volume upstream of said purge valve which has a relatively restricted reverse flow path from said container for flow through the purge valve.

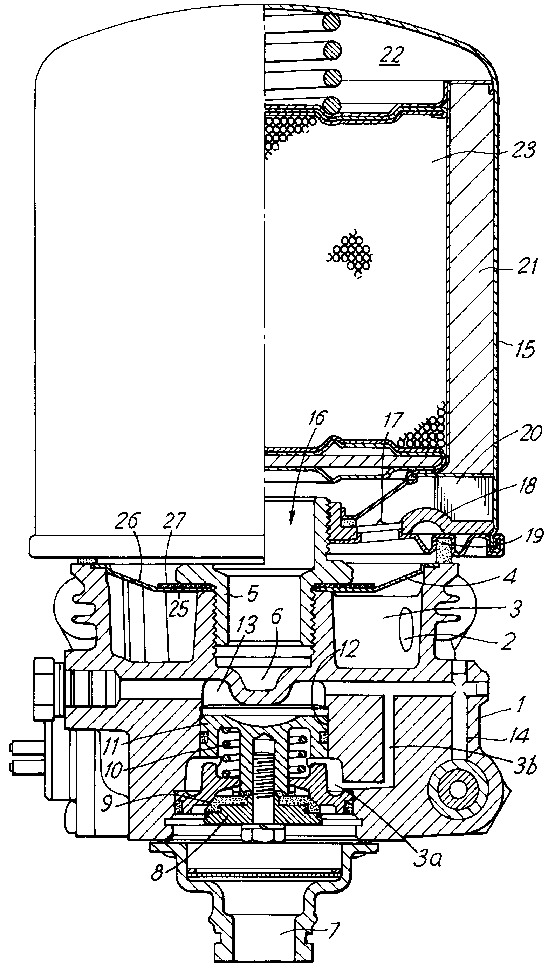

In order that the invention may be more clearly understood and readily carried into effect the same will be further described by way of an example with reference to the single figure of the accompanying drawing.

Referring to the drawing this illustrates a sectional view of an air dryer including the improvement according to the invention. The air dryer comprises a main body 1 having an input port 2 communicating with a chamber 3 defined in the body beneath a wall created by a baffle plate 4. The body also has a delivery port (not shown) communicating with a region 6 which receives delivered air via the central tubular screw-in spigot 5 and a vent port 7 downstream of a purge valve assembly. The purge valve assembly comprises a normally closed spring-biassed piston-operated valve member 8 which normally engages a valve seat 9 under the influence of a spring 10. The valve member 8 is carried by a piston 11 slideable in a cylindrical bore 12 and the upper surface of the piston 11 forms a movable wall of a control chamber 13 subject to pressure signals in a control passage 14 from a governor (not shown) which senses the pressure of the air pressure storage reservoir or reservoirs. A region 3a between the piston 11 and the valve member 9 is connected via a drain passage 3b to the chamber 3.

Mounted on the externally screw-threaded spigot 5 is a generally cylindrical screw-on air-dryer desiccant cartridge 15 which thereby presents a central delivery passage 16 to the main body of the air dryer. Spaced radially outward from the central delivery passage 16, a plurality of inflow apertures such as 17 are provided in an end plate 18 which sealingly engages the housing via an annular seal 19. Received compressed air in chamber 3 from the input port 2 is able to flow from chamber 3 via apertures 25,26 in the baffle plate 4 to the substantially larger volume presented by the canister 15. The forward flow path of compressed air is:then via apertures 17, an annular aluminium mesh filter element 20, a cylindrical felt filter 21 which lines the inner surface of 15 and upper region 22. The air then flows downwardly through a body 23 of granular dessicant material and the delivery passage 16 to chamber 6, the delivery port (not shown) and then to the storage reservoir or reservoirs. The chamber 3 is of substantially much smaller volume than the volume of canister. The forward flow path from the relatively small volume of chamber 3 to the air dryer canister 15 is relatively unrestricted because it takes place via a plurality of apertures such as 25 provided in the baffle plate 4. These apertures are lightly overlayed by a flat flexible annular rubber element 27 which does not impair the forward flow of air via apertures 25. However, rubber element 27 closes the apertures 25 against flow in the opposite direction. The only flow that can take place in this opposite direction is therefore much more restricted being only that which can take place via an additional aperture 26 which is,never covered by the element 27. Typically, the reverse way-through the baffle 4 may therefore be (say) 20% of the forward way-through the baffle 4. This restricted reverse way-through is selected to sufficiently restrict the impulsive release of potential energy, from the interior of the air-dryer, to approximately only that which is stored in the relatively small volume of chamber 3. The level of explosive noise which attends the opening ofthe purge valve is thereby limited to an acceptable level whereas the forward flow through the desiccant and the reverse slow purge flow are unimpaired.

The air dryer described above therefore operates in a generally known manner but affords reduced purge noise. Briefly, upon attainment of a desired fully charged pressure level in a reservoir being charged via the air dryer by a compressor, a governor provides a control signal typically to unload the compressor and also to operate the purge valve. When the purge valve opens, the relatively small volume 3 rapidly discharges towards atmospheric pressure expelling any accumulated pre condensates and this discharge is then supplemented by a continuing slower descent of the pressure in the canister 15 towards atmospheric pressure and a reverse metered or timed flow of dry air from the reservoirs through the desiccant 23, (controlled by means not shown) until the purge valve is reclosed after a desired purge interval has expired.

In an alternative manner of operation, the purge valve 8 may itself be designed to operate as a line-unloader for the compressor. In this case the purge valve 8 will remain open for as long as the compressor is required to remain off-loaded. In addition, either the purge air will be derived from a special storage volume or alternatively means will be provided to interrupt the flow of purge air at the end of the desired purge interval.

## Claims

1. Gas drying apparatus including a main body (1) having a compressed gas input port (2), a compressed gas delivery port (6) and a vent port (7) said body carrying a container (15) of relatively large volume for a drying material (21) and means (4,25) defining a relatively unrestricted forward flow path thereto for directing received compressed gas in a forward direction through said drying material (21) before deliveyr at said delivery port (6), a purge valve (8,9) operable when opened to direct dry gas through said drying material to the vent port (7) for regenerating the drying material and characterised in that said means (4) defines a relatively small volume (3) upstream of said purge valve said small volume having a relatively restricted reverse flow path (26) thereto from said container.

2. Gas drying apparatus as claimed in claim 1 characterised in that said means (4) comprises a wall 4 permitting said forward flow said wall having a plurality of apertures and a flexible member which covers some of said apertures for said reverse flow.

3. Gas drying apparatus as claimed in claim 2 characterised in that said container is attached to said housing by means of a screw-in threaded spigot (15) said wall being located in said body by said screw-in threaded spigot.

4. Gas drying apparatus as claimed in claim 3 characterised in that said flexible member is also located by said screwon threaded spigot (15).

5. Gas drying apparatus substantially as described herein with reference to the accompanying drawing.

**European Patent Office**

**EUROPEAN SEARCH REPORT**

Application Number

EP 92 30 0735

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 036 569 (KNORR-BREMSE GMBH)<br>* page 16, line 7 - line 29; claims 8,10; figure 1 *<br>--- | 1,2 | B01D53/26<br>B60T17/00 |
| X | DE-A-3 636 142 (KNORR-BREMSE GMBH)<br>* column 3, line 67 - column 4, line 1; figure 1 *<br>--- | 1,2 | |
| A | EP-A-0 123 843 (KNORR-BREMSE GMBH)<br>* claims 1-6; figures 1,2 *<br>--- | 1 | |
| A | FR-A-2 627 706 (ROBERT BOSCH GMBH)<br>* claims 1-7; figure 1 *<br>--- | 1 | |
| A | EP-A-0 275 201 (BENDIX LTD)<br>* figures 1-6 *<br>----- | 1 | |
| | | | **TECHNICAL FIELDS SEARCHED (Int. Cl.5)**<br><br>B01D<br>B60T |

The present search report has been drawn up for all claims

| Place of search | Date of completion of the search | Examiner |
|---|---|---|
| THE HAGUE | 18 MAY 1992 | A.F. EIJKENBOOM |